# EUROPÄISCHE PATENTSCHRIFT

(11) **EP 1 586 364 B1**
(45) Veröffentlichungstag und Bekanntmachung des Hinweises auf die Patenterteilung: **18.06.2008**
(21) Anmeldenummer: 05102651.6
(22) Anmeldetag: 04.04.2005
(51) Int. Cl.: B01D 53/04, B01D 46/52, F02M 35/04, B01D 39/20, B01J 20/28

(54) **Adsorptionselement zur Adsorption von Dämpfen**
Adsorption element for adsorption of vapors
Elément d'adsorption pour l'adsorption de vapeurs

(30) Priorität: 14.04.2004 DE 102004018184
(43) Veröffentlichungstag der Anmeldung: 19.10.2005
(73) Patentinhaber: MANN+HUMMEL GmbH, 71638 Ludwigsburg (DE)
(72) Erfinder: Sohnemann, Jens, 84034, Landshut (DE)

(56) Entgegenhaltungen:
- EP-A- 1 064 979
- DE-A1- 19 701 658
- US-A- 4 259 092
- US-A1- 2003 145 732

## Beschreibung

### Stand der Technik

Die Erfindung betrifft ein Brennkraftmaschinenansaugtraktadsorptionselement zur Adsorption von Gasen und Dämpfen aus der im Gasstrom des Ansaugtraktes einer Brennkraftmaschine befindlichen Gasatmosphäre gemäß dem Oberbegriff des Anspruchs 1 Außerdem betrifft die Erfindung ein Verfahren zur Adsorption von Gasen und Dämpfen gemäß dem Anspruch 10.

Adsorptionselemente werden beispielsweise für Luftansaugsysteme von Brennkraftmaschinen verwendet. Die Adsorptionselemente haben hierbei die Aufgabe, Kohlenwasserstoffe, die nach dem Abstellen des Motors aus dem Ansaugsystem zu entweichen drohen, zu adsorbieren. Beim späteren erneuten Betrieb des Motors desorbieren die Kohlenwasserstoffe wieder vom Adsorptionselement in den Ansaugluftstrom und werden dann im Motor verbrannt, wodurch die Kapazität des Adsorptionselementes wieder hergestellt ist.

Aus der US 4,259,092 ist eine Vorrichtung für einen Katalysereaktor oder eine Adsorptionsvorrichtung mit großer Volumenkapazität bekannt. Die Vorrichtung umfasst ein Absorptionselement mit frei durchströmbaren Kanälen. Das Adsorptionselement kann dabei aus einer Schicht mit Aktivkohlefasern gebildet sein.

Aus der EP 1 064 979 A1 ist ein Adsorptionselement für die Filtration von Innenräumen bekannt, das längliche Absorptionskörper parallel zur Flussrichtung aufweist.

Es ist zum Beispiel aus der Offenlegung CA 2 367 031 ein Monolith bekannt, welcher chemische Bestandteile aus einem Gasstrom adsorbiert. Dies wird dadurch erreicht, dass der Gasstrom bei der Durchströmung in direkten Kontakt mit einer Aktivkohleschicht gebracht wird. Nachteilig an dieser Art von extrudierten oder gepressten monolithischen Adsorptionselementen ist, dass sie vorzugsweise aus Pulveraktivkohle und einem Bindemittel hergestellt werden und dadurch eine Sprödigkeit aufweisen, wodurch die Gefahr des Abplatzens von einzelnen Bruchstücken besteht. Weiterhin wird die Adsorptionsleistung dadurch geschmälert, dass das verwendete Bindemittel teilweise das Porensystem des Adsorptionsmediums blockiert. Bei der Verwendung von Monolithen als Adsorptionselement sind deshalb zusätzliche Filterelemente notwendig, um abgelöste Partikel des Adsorptionselementes vom Eintritt in den Gasstrom zurückzuhalten. Die Anordnung von zusätzlichen Filtereinsätzen bedeutet einen erhöhten Aufwand und vergrößert den Strömungswiderstand im Ansaugtrakt. Aufgabe der Erfindung ist es, ein Adsorptionselement zu schaffen, welches bei minimalem Strömungswiderstand eine maximale Adsorptionskapazität erreicht. Diese Aufgabe wird durch die Merkmale des Patentanspruchs 1 sowie des Patentanspruchs 10 gelöst.

Das erfindungsgemäße Adsorptionselement besteht aus mindestens einer Adsorptionslage und einem Abstandselement, welches zwischen den Adsorptionslagen frei durchströmbare Kanäle bildet. Das Abstandselement kann durch eine flächige oder plissierte Lage gebildet sein, wobei immer eine Berührungsfläche zur Adsorptionsschicht besteht. Dabei ist es auch möglich eine perforierte Fläche zu verwenden. Als Materialwahl für das Abstandselement empfiehlt sich gewöhnlicherweise ein Vlies oder ein Papier. Es kann jedoch auch ein Kunststoff oder ein metallisches Element zur Anwendung kommen, wobei sich bei der Materialwahl von Kunststoff oder Metall besonders eine gitterförmige oder stark perforierte Lage empfiehlt. Der freie Strömungsquerschnitt zwischen den Adsorptionslagen kann auch durch eine Faltung, zum Beispiel eine Zick-Zack-Faltung des Abstandselementes erreicht werden. Soll das Adsorptionselement blockförmig ausgeführt sein, so müssen jeweils mehrere Adsorptionslagen und Abstandselemente aufeinander geschichtet werden. Alternativ kann auch die Adsorptionslage gefaltet aufgeschichtet sein und das Abstandselement in ebener Form dazwischen liegen. Die Berührungspunkte zwischen Abstandselement und Adsorptionselement können zur Fixierung unter leichter Spannung montiert sein oder auch durch Kleben miteinander befestigt sein. Als Einbauort eignet sich beispielsweise ein Filtergehäuse oder eine Rohrleitung. Die Befestigung des Adsorptionselementes selbst ist beispielsweise durch kleben oder fügen möglich. Hierbei kann das Adsorptionselement als Lebensdauerbauteil fest und unlösbar eingebaut sein. Eine andere Möglichkeit ist die Ausbildung des Adsorptionselementes als Wechseleinsatz, wobei Dichtungen im Einbauort oder am Adsorptionselement angebracht sein müssen. Die Anpassung des Strömungsquerschnittes an den Volumenstrom kann durch die Anzahl und Länge der Lagen, der Höhe der Falten oder der Höhe der möglichen Plissierung bestimmt werden, wobei auch die Dicke und die Intensität des Adsorptionsmaterials an den auftretenden Volumenstrom angepasst werden muss. Der Strömungsquerschnitt ist nicht zwingend definiert, es kann zum Beispiel durch eine unregelmäßige Plissierung auch ein labyrinthartiger Strömungsquerschnitt entstehen. Der vorteilhafte geringe Druckwiderstand wird dadurch erreicht, dass der Gasstrom nicht durch die Adsorptionslage hindurchströmt, sondern lediglich an der Adsorptionslage vorbeiströmt. Da das Durchströmen der Adsorptionslage vermieden werden kann, ergibt sich auch eine deutliche geringere mechanische Beanspruchung des Adsorptionsmediums, wodurch die Gefahr der Partikelablösung der Adsorptionslage deutlich minimiert wird. Dadurch, dass keine motorgefährdende Partikel in den Luftstrom mitgerissen werden, kann somit auf eine nachgelagerte Filtration des Gasstromes verzichtet werden. Aufgrund der geringeren Belastung des Adsorptionsmediums kann bei gleichen Abmessungen die Standzeit verlängert werden bzw. bei gleicher Standzeit die Baugröße des Adsorptionselementes verringert werden. Der Adsorptionsvorgang findet beim Zurückströmen bzw. diffundieren der Kurbelgehäusegase und der von Einspritzdüsen und Wandungen verdunstenden unverbrannten Kohlenwasserstoffe, beim Motorstillstand statt. Deshalb bleibt den unverbrannten Kohlenwasserstoffen genug Zeit, an die Oberfläche der Adsorptionsanlage zu diffundieren und dort zu adsorbieren. Gegenüber der Durchströmung der Adsorptionslage erfolgt die Desorption beim erfindungsgemäßen Adsorptionselement sehr viel langsamer, da die treibende Kraft zur Desorption in der überströmten Situation herabgesetzt wird. Entsprechend erfolgt die Desorption der Kohlenwasserstoffe in den Ansaugstrom in der kritischen Startphase erst verzögert, wodurch die empfindliche Lambdasonde geschützt und die Gefahr der Emission von unverbrannten Kohlenwasserstoffen mit dem Abgasstrom minimiert wird. Der Gasstrom stellt in der Adsorptionsphase nur ein Minimum gegenüber dem Gasstrom im Motorbetrieb dar. In der Desorptionsphase werden deshalb die Kohlenwasserstoffe sehr viel langsamer in den Gasstrom desorbiert als in der Adsorptionsphase. Als Adsorptionslagen können Medien verwendet werden, welche aus anderen mechanisch stärker belasteten Einbausituationen bekannt sind. Bei Verwendung dieser Medien kann auf die Durchführung aufwendiger Freigabeprüfungen verzichtet werden.

In einer vorteilhaften Ausgestaltung der Erfindung ist das Abstandselement aus einer Kunststoff- oder einer Papierlage gebildet. Dieses kann gefaltet, plissiert, perforiert oder planflächig zwischen den Adsorptionslagen angeordnet sein, wobei im Fall einer gestapelten Anordnung des Adsorptionselementes die einzelnen Lagen den gleichen Zuschnitt aufweisen können. Die Umfangskontur des Adsorptionselementes kann in umgekehrter Weise durch die Zuschnitte einzelner aufeinander gestapelten Lagen bestimmt werden. Dies hat den Vorteil, dass auch polygone Umfangsgeometrien des Adsorptionselementes möglich sind und über den ganzen Querschnitt des Elementes homogene Kanalquerschnitte erreicht werden. Weiterhin bietet es die Möglichkeit, eine Lage des Abstandelementes länger zu gestalten und damit das Abstandselement als Umhüllung des Adsorptionselementes zu nutzen, wenn der überstehende Bereich der Abstandslage um das Adsorptionselement gewickelt wird.

Eine weitere Ausgestaltung der Erfindung ergibt sich durch die Verwendung einer diffusionsoffenen Schicht als Abstandselement zwischen den Adsorptionslagen. Diffusionsoffen bedeutet, dass, das Material des Abstandselementes vom Gasstrom durchdrungen werden kann. Hierdurch wird es ermöglicht, die Adsorptionslage beidseitig mit einer diffusionsoffenen Abstandslage zu überdecken. Die Adsorption sowie auch die Desorption kann so durch die diffusionsoffene Lage hindurch stattfinden. Dies erlaubt auch das Einpacken der Adsorptionslagen zwischen zwei Abstandslagen. Bei dieser Variante wird das Mitreißen von Partikeln in den Gasstrom vorteilhaft behindert bzw. ausgeschlossen, wobei eine Adsorption der Kohlenwasserstoffe durch das Medium hindurch nach wie vor gewährleistet bleibt.

Gemäß einer weiteren vorteilhaften Gestaltung sind die Adsorptionselemente aus Zeolith und/oder aus Aktivkohle gebildet. Diese können beispielsweise als aktive Fasern in geeigneter Weise, in oder auf einem Trägermaterial wie beispielsweise Papier oder Vlies fixiert werden. Aktive Fasern können wenn sie stark genug sind, können auch ohne Trägermittel als Adsorptionslage dienen. Die verschiedenen Adsorptionseigenschaften der Materialien können auch kombiniert werden und somit können auch mehrere Adsorbermedien in einem Element zum Einsatz kommen. Dabei wird es vorteilhaft erlaubt, die Adsorptionseigenschaften der Medien auf die Belastung des Gasstromes einzustellen.

Eine zweckmäßige Ausführung des Adsorptionselementes ergibt sich durch das gemeinsame Aufwickeln der Adsorptionslage und der Abstandslage. Hierbei muss mindestens eine Lage eine Plissierung aufweisen. Diese bildet im aufgewickelten Zustand die frei durchströmbaren Kanäle und gewährleistet den Abstand zur gegenüberliegenden Lage, wobei die Plissierung sowohl an der Adsorptionslage als auch an der Abstandslage vorhanden sein kann. Um das aufgewickelte Element zu fixieren bietet sich die Möglichkeit das Abstandselement länger zuzuschneiden und das überstehende Ende auf dem Umfang zu verkleben. Vorteilhaft bei dieser Gestaltung ist der Einfache und sichere Herstellungsprozess.

In einer weiteren vorteilhaften Ausgestaltung sind die Stirnseiten des Adsorptionsmediums versiegelt. Dies kann mit einem Thermoplast, einem Duroplast oder auch mit einem aus mehreren Komponenten bestehenden Kleber erreicht werden. Das Anschmelzen einer schmelzbaren Trägerschicht der Stirnseite bietet eine weitere Möglichkeit der Versiegelung. Das Versiegeln der Stirnseiten kann an den vorgefertigten zugeschnittenen Lagen oder auch erst nach dem Komplettieren der Adsorptionslagen mit den Abstandslagen erfolgen. Insbesondere bei spröderen Adsorptionslagen ist eine Versiegelung nach der Montage möglich, da nach der Montage in der Regel keine Durchbiegung der Lagen mehr stattfindet. Durch die Versiegelung wird ein Herausrieseln der Adsorbermedienpartikel aus den Stirnseiten vermieden und somit die Rückstandsfreiheit der Sauganlage gewährleistet.

Eine weitere vorteilhafte Gestaltung der Erfindung ergibt sich durch die Einformung einzelner Adsorptionselemente in Taschen, welche in den Abstandslagen vorgesehen sind. Dabei kann die Taschenform in eine Abstandslage eingeprägt sein oder auch durch die wellige Form der Abstandslage gebildet werden. Bei beiden Anordnungen wird das Adsorptionsmedium in die Taschen eingelegt und anschließend von einer planen oder ebenfalls gewellten Abstandslage verschlossen. Durch die Ausformungen der Taschen bildet sich in beiden Fällen eine plissierte Lage, welche in gestapelter oder in aufgerollter oder in rund geschlossener Anordnung im Adsorptionselement einen freien Strömungsquerschnitt bildet. Die Stirnseiten der einzelnen Taschen können mit den bereits erwähnten Verfahren verschlossen und versiegelt werden. Bei dieser Ausführungsform der Erfindung wird es vorteilhaft ermöglicht, auch Korn- oder Formaktivkohle in die verschlossenen Taschen des Papiers einzubringen. Probleme mit Bindemitteln, die das Porensystem blockieren, treten bei dieser Anordnung nicht auf, da auf zusätzliche Bindemitteln weitgehend verzichtet werden kann.

Gemäß einer vorteilhaften Ausführungsform empfiehlt es sich, um das Adsorptionselement ein eine Stützschicht anzuordnen, welches alle geschichteten Lagen umschließt. Die Stützschicht kann zum Beispiel durch übergroß zugeschnittene Lagen des Abstandselementes gebildet werden, welche um den Umfang des Adsorptionselementes gewickelt sind. Das Filterelement kann weiterhin von einem Gehäuse umschlossen sein, das aus Kunststoff oder Metall besteht ist und das Element direkt über den Lagen umschließt oder eine dazwischenliegende Stützschicht umfasst. An diesem Filtergehäuse kann zum Beispiel eine Dichtung angebracht sein, die eine zuverlässige Trennung zwischen An- und Abströmseite gewährleistet. Ein Filtergehäuse oder eine das Element umfassende Stützschicht verschafft dem Adsorptionselement zusätzliche Stabilität. Das Adsorptionselement kann bei üblichen Anwendungsbedinnungen als Lebensdauerbauteil konzipiert werden. Diese Ausgestaltung des Elementes erleichtert jedoch den Austausch des Adsorptionselementes in einen dafür vorgesehenen Einbauraum, zum Beispiel in ein Luftfilterelement oder als Inline-Anordnung an einem Rohrstutzen. Bei einer Inline-Anordnung des Adsorptionselementes wird es auch erleichtert, das Element in einer Abzweigung des Luftführungssystems anzuordnen, wobei es durch eine Klappensteuerung separat angesteuert werden kann. Bei dieser Anordnung ergibt sich die Möglichkeit, das Element in unterschiedlichen Betriebsphasen des Brennkraftmotors zu- bzw. abzuschalten, wobei das Adsorptionselement im Stillstand des Motors zugeschalten sein muss.

Eine weitere vorteilhafte Gestaltung des Adsorptionselementes ergibt sich aus der Materialwahl des Adsorptionsmediums. Bei den bisher üblicherweise verwendeten Adsorptionsmedien verringert sich die Adsorptionsleistung beim Temperaturanstieg. Diese Eigenschaft hat einen sehr ungünstigen Einfluss auf die eigentliche Funktion des Elementes, da sich bei Abstellen des Motors mangels Luftkonvektion der gesamte Motorraum und somit auch das Adsorptionselement aufheizt. Diese Problematik kann durch sogenanntes Phase Change Material, welches dafür sorgt, dass die Adsorptionskapazität bei Temperaturanstieg konstant bleibt, kompensiert werden. Dadurch wird eine vorteilhafte Anpassung der Leistungsfähigkeit des Adsorptionselementes an die umgebenden Temperaturbedingungen erreicht.

Beim erfindungsgemäßen Verfahren zur Adsorption von Gasen und Dämpfen aus der im Gasstrom des Ansaugtraktes einer Brennkraftmaschine befindlichen Gasatmosphäre wird das Gas durch frei durchströmbare Kanäle des Adsorptionselementes geführt. Der Gasstrom muss in diesem Fall das Adsorptionsmedium nicht durchströmen, sondern wird nur am Adsorptionsmedium entlanggeführt. Dabei kann der Gasstrom auch durch ein perforiertes oder diffusionsoffenes Abstandselement vom Adsorptionsmedium getrennt sein. Eine Adsorptionsleistung bleibt deshalb trotzdem gewährleistet, da der Volumenstrom im Adsorptionsfall gegenüber dem Desorptionsfall wesentlich minimiert ist. Vorteilhaft bei diesem Verfahren ist, dass der Hauptgasstrom das Adsorptionsmedium nicht durchströmen muss. Dadurch werden der Strömungswiderstand und damit der Druckverlust im Vergleich zu herkömmlichen Adsorptionsmethoden deutlich verringert.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren bei der Ausführungsform der Erfindung verwirklicht sein können.

### Zeichnung

Weitere Einzelheiten der Erfindung werden in der Zeichnung anhand von schematischen Ausführungsbeispielen beschrieben. Hierbei zeigen
- Figur 1: ein gewickeltes Adsorptionselement im Teilschnitt perspektivisch dargestellt,
- Figur 2: ein geschichtetes quaderförmiges Adsorptionselement im Vollschnitt perspektivisch dargestellt.
- Figur 3: zeigt einen Teilausschnitt eines geschichteten Adsorptionselementes, wobei entsprechende Bauteile der vorhergehenden Figuren mit gleichen Bezugszeichen versehen sind.

### Beschreibung der Ausführungsbeispiele

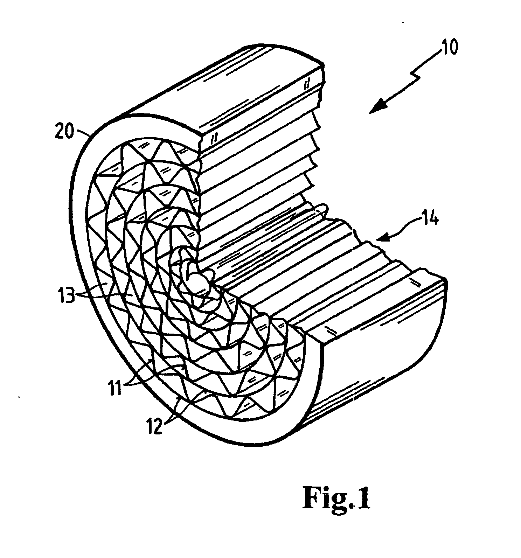

Figur 1 zeigt ein Adsorptionselement 10 welches eine Adsorptionslage 12 und ein Abstandselement 11 aufweist. Im gezeigten Ausführungsbeispiel ist das Abstandselement 11 plissiert bzw. gewellt ausgeführt, wobei jeweils eine Lage des Abstandselementes 11 und der Adsorptionslage 12 von innen nach außen aufgerollt ist. Durch die Wellung des Abstandselementes 11 ergeben sich zwischen Adsorptionslage 12 und Abstandselement 11 frei durchströmbare Kanäle 13. Der Gasstrom kann somit zwischen den Stirnseiten 14 durch das Adsorptionselement 10 strömen, ohne eine Lage durchströmen zu müssen, vielmehr strömt er in dieser Gestaltung direkt an einer Adsorptionslage 12 entlang. Die Form des Adsorptionselementes 10 muss aufgrund der Wickelung nicht zwangsweise rund sein, sondern kann auch oval oder einem Polygon annähernd ausgebildet werden. Die Berührungsflächen zwischen Adsorptionslage 12 und Abstandselement 11 können klebend miteinander verbunden sein oder auch nur kraftschlüssig eingespannt sein. Findet eine Verklebung statt, muss diese nicht an allen Berührungsflächen ausgeführt werden, sondern kann auch je nach Festigkeitsbedarf nur an einzelnen Punkten verklebt werden. Um das aufgerollte Adsorptionselement 10 zu stabilisieren, kann es von einer zusätzlichen Lage eines Abstandselementes 11 umwickelt werden, wobei diese Lage nicht gewellt zu sein braucht. Das gezeigte zylinderförmige Adsorptionselement 10 ist in einen Gehäusering 20 eingefasst und kann direkt in ein dafür vorgesehenes Rohrsystem eingeschoben werden oder ist ein Teil eines Rohrsystems.

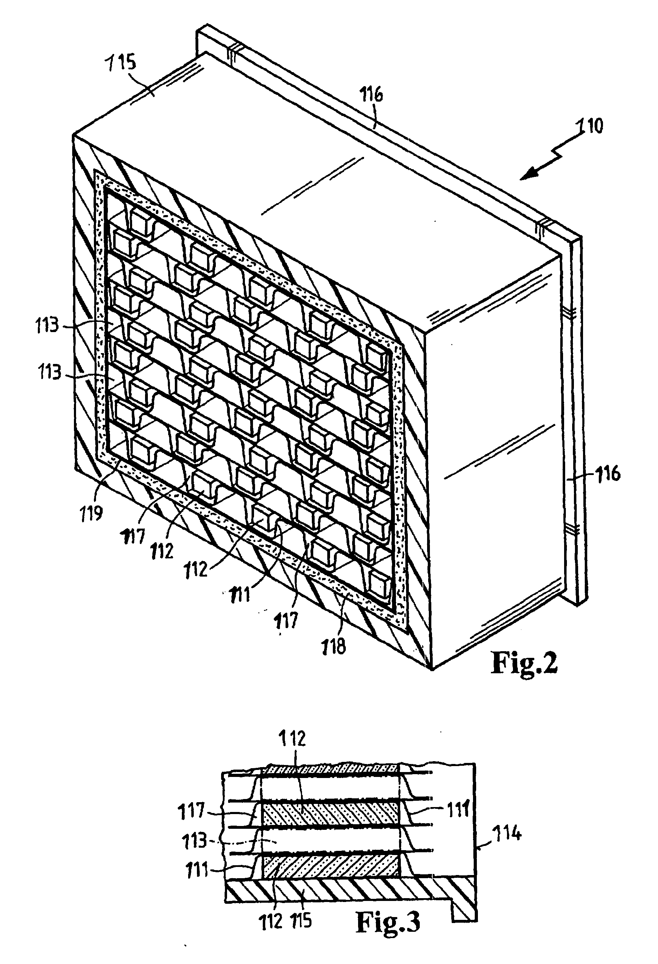

In Figur 2 ist ein Adsorptionselement 110 in einem Quaderförmigen Gehäuse 115 dargestellt. Ein Gehäuse 115 ist zur Einpassung an ein nicht dargestelltes Luftführungssystem vorgesehen. Innerhalb des Gehäuses 115 sind die Adsorptionslagen 112 in durch die Abstandselemente 111 gebildeten Taschen 117 angeordnet. Die reihenweise aufeinander geschichteten Adsorptionslagen 112 sind in jeweils versetztem Abstand über den ganzen Strömungsquerschnitt des Gehäuses 115 aufgestapelt. Durch die Abstände der aneinander aufgereihten Taschen 117 bilden sich die freien Strömungskanäle 113. Die gesamten Adsorptionslagen 112 werden von umschließenden Lagen 119 umwickelt, um vor der Montage in das Gehäuse 115 eine gefestigte Form anzunehmen. Zwischen den umschließenden Lagen 119 und dem Gehäuse 115 ist ein Dichtmittel eingebracht, welches eine feste und dichte Verbindung zwischen Adsorptionslagen 112 und Gehäuse 115 herstellt. Die Taschen 117 sind an ihren Stirnseiten verschlossen, dadurch strömt der Gasstrom, durch die frei durchströmbaren Kanäle 113 und nicht direkt an den Adsorptionslagen 112 vorbei. Die Adsorption und die Desorption der Kohlenwasserstoffe finden somit durch das Abstandselement 111 hindurch statt. Die Abstandselemente 111 müssen in diesem Fall flächig diffusionsoffen oder perforiert ausgeführt sein.

In Figur 3 ist ein Teilschnitt in Längsrichtung gemäß der Figur 2 gezeigt. Der Figur 2 entsprechende Bauteile sind mit denselben Bezugszeichen versehen. Die Adsorptionslagen 112 sind von den, durch die Abstandselementen 111 gebildeten Taschen 117 umschlossen sind. An den Stirnseiten 114 sind die Lagen des Abstandselementes 111 zusammengeführt, diese können an den Verbindungsstellen verklebt oder verschweißt werden. In diesem Beispiel sind die Adsorptionslagen 112 direkt an das Gehäuse 115 angrenzend und können zum Beispiel direkt am Gehäuse angeklebt sein.

## Patentansprüche

1. Brennkraftmaschinenansaugtraktadsorptionselement zur Adsorption von Gasen und Dämpfen der im Ansaugtrakt einer Brennkraftmaschine befindlichen Gasatmosphäre, angeordnet in einem Strömungsquerschnitt des Ansaugtraktes, wobei das Adsorptionselement frei durchströmbare Kanäle aufweist durch welche der Gasstrom geführt ist, **dadurch gekennzeichnet, dass** das Adsorptionselement mindestens eine Adsorptionslage aufweist, wobei die Kanäle durch mindestens ein Abstandselement gebildet sind, wobei das Abstandselement zwischen den Adsorptionslagen angeordnet ist.

2. Adsorptionselement nach Anspruch 1, **dadurch gekennzeichnet, dass** das Abstandselement durch wenigstens eine Papier-, eine Vlies, oder eine Kunststofflage gebildet ist.

3. Adsorptionselement nach einem der vorhergehenden Ansprüche, **dadurch gekennzelchnet, das** das Abstandselement diffusionsoffen ist.

4. Adsorptionselement nach einem der vorhergehenden Ansprüche, **dadurch gekennzeichnet, dass** die Adsorptionslage Aktivkohle oder Zeolith enthält.

5. Adsorptionselement nach einem der vorhergehenden Ansprüche, **dadurch gekennzeichnet, dass** die Adsorptionslage mit mindestens einem Abstandselement aufgewickelt ist, wobei mindestens eine der Lagen eine Plissierung aufweist.

6. Adsorptionselement nach einem der vorhergehenden Ansprüche **dadurch gekennzeichnet, dass** das Adsorptionselement Stirnseiten aufweist, welche versiegelt sind.

7. Adsorptionselement nach einem der Ansprüche 1 bis 4, **dadurch gekennzeichnet, dass** mindestens eine Adsorptionslage zwischen zwei Abstandselementen eingeformt ist, wobei durch die Einformung der Adsorptionslage in die Abstandselemente eine Plissierung gebildet ist.

8. Adsorptionselement nach einem der vorhergehenden Ansprüche, **dadurch gekennzeichnet, dass** das Adsorptionselement von einer Umhüllung umschlossen ist wobei die Umhüllung ein Gehäuse bildet, welches im Ansaugtrakt einer Brennkraftmaschine montierbar ist.

9. Adsorptionselement nach einem der vorhergehenden Ansprüche, **dadurch gekennzeichnet, dass** die Adsorptionslage aus einem Material gebildet ist, welches den Temperatureinfluss auf die Adsorptionskapazität kompensiert

10. Verfahren zur Adsorption von Gasen und Dämpfen aus der im Ansaugtrakt einer Brennkraftmaschine befindlichen Gasatmosphäre durch ein Adsorptionselement nach Anspruch 1, wobei der Gasstrom durch frei durchströmbare Kanäle geführt wird, wobei die Kanalwandungen ganz oder teilweise durch eine Adsorptionslage oder durch eine an der Adsorptionslage angrenzende, diffusionsoffenes Abstandselement gebildet werden, wobei Kohlenwasserstoffe beim Zurückströmen der Gase aus der Brennkraftmaschine von der Adsorptionslage adsorbiert werden und wobei die adsorbierten Kohlenwasserstoffe beim Einströmen von Ansaugluft in die Brennkraftmaschine von der Adsorptionslage in den Ansaugluftstrom desorbiert werden.

## Claims

1. Adsorption element for an intake tract of an internal combustion engine for adsorbing gases and vapors from the gaseous atmosphere in the intake tract of an internal combustion engine, disposed within a flow cross section of the intake tract, with the adsorption element featuring through-flowable channels through which the gas flow is guided, **characterized in that** the adsorption element features at least one adsorption layer, the channels being formed by at least one spacer element, the spacer element being disposed between the adsorption layers.

2. Adsorption element according to claim 1, **characterized in that** the spacer element is formed by at least one paper, one fleece or one plastic layer.

3. Adsorption element according to one of the above-mentioned claims, **characterized in that** the spacer element is open to diffusion.

4. Adsorption element according to one of the above-mentioned claims, **characterized in that** the adsorption layer contains either activated carbon or zeolite.

5. Adsorption element according to one of the above-mentioned claims, **characterized in that** the adsorption layer is wound up with at least one spacer element, at least one of the layers featuring pleated folds.

6. Adsorption element according to one of the above-mentioned claims, **characterized in that** the adsorption element features front ends which are sealed.

7. Adsorption element according to one of the claims 1 to 4, **characterized in that** at least one adsorption layer is mold between two spacer elements, pleated folds being formed by the mold of the adsorption layer into the spacer elements.

8. Adsorption element according to one of the above-mentioned claims, **characterized in that** the adsorption element is enclosed by an envelope, the envelope forming a housing which can be mounted in the intake tract of an internal combustion engine.

9. Adsorption element according to one of the above-mentioned claims, **characterized in that** the adsorption layer is formed by a material that compensates the temperature impact on the adsorption capacity.

10. Method for the adsorption of gases and vapors in an intake tract of an internal combustion engine by an adsorption element according to claim 1, the gas flow being guided through freely through-flowable channels, the channel walls being formed completely or partially by an adsorption layer or by a spacer element adjacent to the adsorption layer and open to diffusion, hydrocarbons being adsorbed by the adsorption layer when the gases flow back from the internal combustion engine, the adsorbed hydrocarbons being desorbed from the adsorption layer into the intake air flow when the intake air flows into the internal combustion engine.

## Revendications

1. Elément d'adsorption pour le circuit d'admission d'un moteur à combustion interne pour l'adsorption de gaz et de vapeurs dans l'atmosphère gazeuse se trouvant dans le circuit d'admission d'un moteur à combustion interne, disposé dans une section d'écoulement du circuit d'admission, et comportant des canaux pouvant être traversés librement par le courant de gaz,
**caractérisé en ce que**
l'élément d'adsorption comprend au moins une couche d'adsorption, les canaux sont formés par au moins un élément d'écartement et l'élément d'écartement est disposé entre les couches d'adsorption.

2. Elément d'adsorption selon la revendication 1,
**caractérisé en ce que**
l'élément d'écartement est formé par au moins une couche de papier, de tissu non tissé ou de matière plastique.

3. Elément d'adsorption selon l'une quelconque des revendications précédentes,
**caractérisé en ce que**
l'élément d'écartement est ouvert à la diffusion.

4. Elément d'adsorption selon l'une quelconque des revendications précédentes,
**caractérisé en ce que**
la couche d'adsorption contient du charbon actif ou de la zéolithe.

5. Elément d'adsorption selon l'une quelconque des revendications précédentes,
**caractérisé en ce que**
la couche d'adsorption est enroulée avec au moins un élément d'écartement, au moins une des couches présentant un plissage.

6. Elément d'adsorption selon l'une quelconque des revendications précédentes,
**caractérisé en ce que**
l'élément d'adsorption présente des faces frontales, qui sont scellées.

7. Elément d'adsorption selon l'une quelconque des revendications 1 à 4,
**caractérisé en ce qu'**
au moins une couche d'adsorption est formée entre deux éléments d'écartement, un plissage étant formé par le façonnage de la couche d'adsorption dans les éléments d'écartement.

8. Elément d'adsorption selon l'une quelconque des revendications précédentes,
**caractérisé en ce que**
l'élément d'adsorption est entouré par une gaine, formant un boîtier qui peut être monté dans le circuit d'admission d'un moteur à combustion interne.

9. Elément d'adsorption selon l'une quelconque des revendications précédentes,
**caractérisé en ce que**
la couche d'adsorption est en une matière qui compense l'influence de la température sur le pouvoir d'adsorption.

10. Procédé pour l'adsorption de gaz et de vapeurs dans une atmosphère gazeuse se trouvant dans le circuit d'admission d'un moteur à combustion interne, au moyen d'un élément d'adsorption selon la revendication 1,
selon lequel le courant de gaz est conduit à travers des canaux pouvant être parcourus librement, les parois des canaux sont formées entièrement ou partiellement par une couche d'adsorption ou par un élément d'écartement ouvert à la diffusion, adjacent à la couche d'adsorption, des hydrocarbures sont adsorbés par la couche d'adsorption lors du reflux des gaz venant du moteur à combustion interne, et les hydrocarbures adsorbés sont désorbés de la couche d'adsorption dans le courant d'air d'admission lors de l'entrée d'air d'admission dans le moteur à combustion interne.
